(19) **Europäisches Patentamt**

**European Patent Office**

**Office européen des brevets**

(11) **EP 0 751 369 B1**

(12) **EUROPÄISCHE PATENTSCHRIFT**

(45) Veröffentlichungstag und Bekanntmachung des Hinweises auf die Patenterteilung:
**06.11.2002 Patentblatt 2002/45**

(51) Int Cl.7: **G01B 7/28**, G01B 7/34, G01B 5/28, G01B 21/04, G01B 21/30

(21) Anmeldenummer: **96109717.7**

(22) Anmeldetag: **18.06.1996**

(54) **Verfahren zur Filterung von Messwertkurven**

Method for filtering measured values of curves

Méthode pour filtrer des courbes de mesure

(84) Benannte Vertragsstaaten:
**DE FR GB IT**

(30) Priorität: **30.06.1995 DE 19523885**

(43) Veröffentlichungstag der Anmeldung:
**02.01.1997 Patentblatt 1997/01**

(73) Patentinhaber:
- **Carl Zeiss**
  **89518 Heidenheim (Brenz) (DE)**
  Benannte Vertragsstaaten:
  **DE FR IT**
- **Carl-Zeiss-Stiftung, trading as Carl Zeiss**
  **89518 Heidenheim (Brenz) (DE)**
  Benannte Vertragsstaaten:
  **GB**

(72) Erfinder:
- **Ebersbach, Peter, Dr.**
  **73457 Essingen (DE)**
- **Staaden, Ulrich**
  **73431 Aalen (DE)**

(56) Entgegenhaltungen:
WO-A-90/13113          DE-A- 3 136 918
DE-A- 4 335 303       US-A- 5 214 708
US-A- 5 255 215       US-A- 5 345 236
US-A- 5 400 371

- PATENT ABSTRACTS OF JAPAN vol. 018, no. 420 (P-1782), 5.August 1994 & JP 06 129849 A (MITSUTOYO CORP), 13.Mai 1994,
- PATENT ABSTRACTS OF JAPAN vol. 006, no. 016 (E-092), 29.Januar 1982 & JP 56 137724 A (CASIO COMPUT CO LTD), 27.Oktober 1981,

EP 0 751 369 B1

**Beschreibung**

Die Erfindung betrifft ein Verfahren zur vorzugsweisen digitalen Filterung von Meßwertdaten, bei dem die als Punktfolge vorliegenden Eingangs-Meßwerte rechnerisch mit einer Filterfunktion gefaltet werden. Solche Verfahren finden beispielsweise Anwendung bei Rauheitsmessungen oder Formmessungen. So besitzen Rauheitsmeßgeräte sogenannte Wellenfilter die bewirken, daß die langwelligen Anteile der aufgenommenen Rauheitsmeßkurven nur teilweise bzw. gar nicht in das Rauheitsprofil übernommen werden. Entsprechend werden für diesen Zweck Hochpaßfilter eingesetzt. Hingegen verwenden Formmeßgeräte Tiefpaßfilter, z.B. Gaußfilter oder Filter mit einer 2RC-Charakteristik, um störende kurzwellige Anteile der aufgenommenen Meßkurve zu unterdrücken und das Wellenprofil zu glätten.

Hierbei erfolgt die Filterung der Meßwerte oft auch digital mit Hilfe eines Rechners, der die analog aufgenommenen und nach digitaler Wandlung gespeicherten, als quasianaloge Punktfolge vorliegenden Meßwerte digital filtert. Die Arbeitsweise einer Vorrichtung mit einem solchen digitalen Filter ist beispielsweise in der US-PS 53 90 536 beschrieben. Nähere Erläuterungen betreffend Profilfilter zur Anwendung in elektrischen Tastschnittgeräten finden sich außerdem in der DIN-Norm 4777, weitere Hinweise zur Verwendung dieser Filter in Rauheitsmeßgeräten in den DIN-Normen 4776, 4768 und 4772.

Die bekannten Rauheits- und Formmeßgeräte tasten die Oberfläche eines Werkstücks mit gleichförmiger Geschwindigkeit ab und nehmen Meßwerte mit konstanter Datenrate auf. Demzufolge ist der Abstand zwischen benachbarten Meßwerten stets konstant. Für diesen Fall wurden auch bereits digitale Filteralgorithmen aufgestellt, mit denen die Charakteristik eines Gaußfilters oder eines 2 stufigen RC-Filters nachgebildet wird.

Üblicherweise geht man hier so vor, daß die Funktion der Eingangs-Meßwerte (Ye(x)) mit der gewählten Filterfunktion $g(\xi)$ gefaltet wird, die oft auch als Gewichtsfunktion oder Stoßübergangsfunktion bezeichnet wird. Mathematisch läßt sich dieses Faltungsprodukt als Duhamel-Integral schreiben:

$$Ya(x) = g(x) * Ye(x) = \int Ye(x-\xi) \cdot g(\xi) \cdot d\xi \tag{1}$$

Das bedeutet, daß für jeden Punkt Ya(xj) die Kurven Ye(x) und $g(\xi)$ punktweise miteinander multipliziert und das Ergebnis anschließend integriert werden muß, d.h. man erhält

$$Ya(x_j) = \int Ye(x_j - \xi) \cdot g(\xi) \cdot d\xi \tag{2}$$

Da die Meßwerte nur an diskreten Stellen vorliegen, verwendet man in der Praxis oft Näherungslösungen. In der Regel werden hierbei die Punkte des Kurvenzugs der Eingangs-Meßwerte einzeln mit dem Funktionswert einer vereinfachten Filterfunktion an der betreffenden Stelle multipliziert und die erhaltenen Produkte einfach aufsummiert. Durch mehrfaches Anwenden einfacher Filterfunktionen nacheinander auf die Eingangs-Meßwerte können dann auch Gaußfilter oder Filter mit einer sogenannten 2RC-Charakteristik angenähert werden. Beispiele dafür finden sich in der eingangs genannten US-PS 5 390 536 oder in der dort zitierten DE-PS 30 02 185.

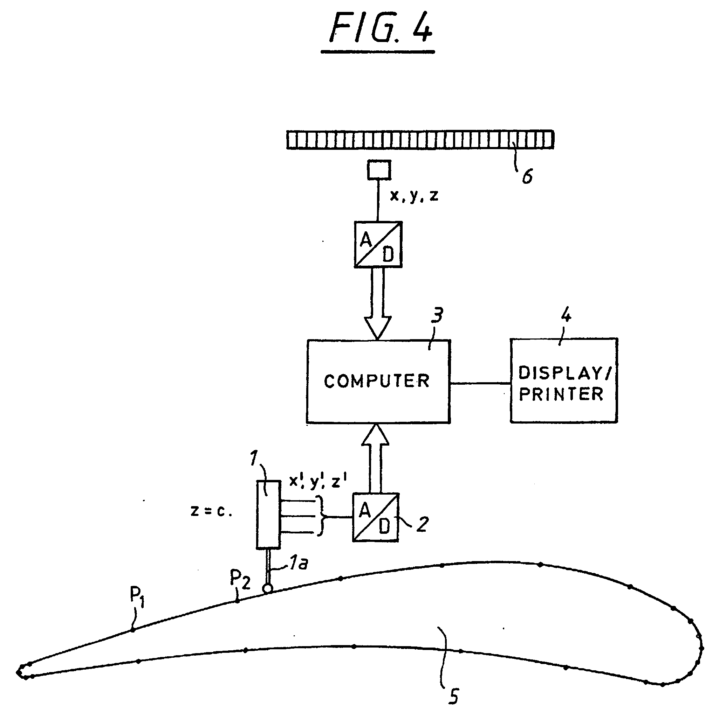

Die vorstehend beschriebene Näherungsmethode versagt jedoch dann, wenn die Meßpunkte nicht äquidistant vorliegen. Das ist beispielsweise dann der Fall, wenn das zur Aufnahme von Formmeßwerten verwendete Koordinatenmeßgerät das zu vermessende Werkstück mit variabler Geschwindigkeit abtastet und hierbei ebene Abschnitte der Werkstückoberfläche relativ schnell, Bahnabschnitte mit stärkerer Krümmung jedoch entsprechend dem Ausmaß der Krümmung mit langsamerer Geschwindigkeit abfährt. Bei vorgegebener Taktrate für die Meßwertaufnahme wird dann der Abstand zwischen den verschiedenen Meßpunkten auf der Werkstückoberfläche ungleichmäßig. Dieser Fall ist in Figur 4 skizziert. Dort ist mit (1) der messende Tastkopf eines Koordinatenmeßgerätes bezeichnet, dessen nachgiebig gelagerter Taststift (1a) unter Berührung der Tastkugel mit der Oberfläche eines Flügels (5) dessen Profil abfährt. Die Meßwerte (x', y', z'), die die Auslenkung des Taststifts (1a) im Tastkopf charakterisieren, werden von einem Analog-Digitalwandler (2) mit konstanter Datenrate digitalisiert und an einen Rechner (3) zur Abspeicherung weitergeleitet. Gleiches geschieht mit den Meßwerten der Maßstäbe (6) in den drei Achsen (x, y und z) des Koordinatenmeßgerätes, an dem der Tastkopf (1) befestigt ist. Da der Tastkopf (1) an den beiden Enden des Flügels (5), an denen sein Profil sehr stark gekrümmt ist, entsprechend langsamer auf seiner Bahn verfahren wird, liegen die Meßpunkte an diesen Stellen deutlich dichter. Das gleiche Ergebnis erhält man, wenn man anstelle des die Oberfläche des das Werkstücks (5) mechanisch berührend abtastenden Tasters (1) einen über die Werkstückoberfläche bewegten optischen Abstandssensor einsetzt.

Ungleichmäßig beabstandete Meßpunkte erhält man auch dann, wenn der zur Meßwertaufnahme verwendete Sensor bezüglich seiner Datenrate nicht mit dem Takt des Mikroprozessorsystems synchronisiert ist, das die Daten weiterverarbeitet.

Wendet man die bisher bekannten Filteralgorithmen für gleichmäßig beabstandete Meßpunkte nun auf Meßwertkurven an, deren Meßpunkte ungleichmäßige Abstände besitzen, dann erhält man fehlerhafte Ergebnisse. Beispielsweise hat sich bei Formmessungen an einem Wellennormal gezeigt, daß dann, wenn die Meßpunkte bezüglich ihres Abstandes streuten, die vorher relativ gleichmäßigen Amplituden der Wellentäler und -berge nach digitaler Filterung mit einem 2RC-Filter mehr oder weniger starke Schwankungen zeigten, d.h. es ergaben sich Schwebungen im Zuge des digitalen Filterprozesses, die das Meßergebnis verfälschten.

Der Erfindung liegt deshalb die Aufgabe zugrunde ein Verfahren zur vorzugsweise digitalen Filterung von Meßwertkurven anzugeben, das auch dann gute Ergebnisse liefert, wenn die Punktfolge der Eingangs-Meßwerte bzw. deren Stützstellen nicht äquidistant beabstandet sind.

Diese Aufgabe wird mit den im Anspruch 1 angegebenen Maßnahmen gelöst.

Gemäß der Erfindung werden also die Abstände zwischen den Stützstellen der Eingangs-Meßpunkte bei der digitalen Faltung mit berücksichtigt. Somit werden mit dem neuen Verfahren in sehr guter Näherung auch Meßwertkurven gefiltert, deren Meßpunkte nicht äquidistant beabstandet sind. Nach dem neuen Verfahren spielt der Abstand der Meßpunkte keine Rolle mehr, d.h. das Verfahren kann universell sowohl auf Meßwertkurven angewandt werden, deren Stützstellen äquidistant beabstandet sind als auch auf solche, deren Abstand variiert.

Bei dem neuen Verfahren werden zweckmäßig die Eingangs-Meßwerte punktweise mit Funktionswerten der Filterfunktion multipliziert und die Produkte mit dem Wert des jeweiligen Abstands zu den benachbarten Meßpunkten gewichtet, zweckmäßigerweise so, daß für den Abstandswert jeweils der Mittelwert des Abstandes zu den Stützstellen der beiden direkt benachbarten Meßpunkte mit dem Funktionswert der Filterfunktion an der betreffenden Stelle multipliziert wird. Hierbei ist allerdings noch zu beachten, daß die so modifizierte Filterfunktion normiert wird, bevor sie mit den zu filternden Eingangs-Meßwerten gefaltet wird.

Die Meßwertkurven können beispielsweise Formmeßwerte oder Rauheitsmeßwerte sein, die die Geometrie bzw. Rauheit einer Werkstückoberfläche beschreiben. Daneben ist es auch möglich, beliebige Meßwerte zu filtern, die nicht äquidistant in Bezug auf ihren zeitlichen oder geometrisch räumlichen Abstand vorliegen, beispielsweise Intensitätsmeßwerte von Sensoren, die in unterschiedlichen Zeitabständen aufgenommen werden oder in ungleichmäßiger Verteilung im Raum plaziert sind.

Nachfolgend wird das Verfahren detaillierter anhand der Figuren 1 - 6 der beigefügten Zeichnungen erläutert.

Figur 1   zeigt in drei räumlich einander zugeordneten Diagrammen eine ungefilterte Meßwertkurve mit den als nicht äquidistante Punktfolge vorliegenden Eingangs-Meßwerten im oberen Teil, in der Mitte den Verlauf der Filterfunktion ($g(\xi)$) und im unteren Teil die Kurve der gefilterten Meßwerte;

Figur 2 a -c   sind Formplots eines kreisförmigen Wellennormals, wobei die in Figur 2a dargestellten Meßwerte ohne Berücksichtigung der ungleichmäßigen Punktabstände gefiltert wurden, Figur 2b die Meßwertkurve zeigt, die gemäß dem neuen Verfahren mit Berücksichtigung der ungleichmäßigen Punktabstände gefiltert wurden und Figur 2c die Kurve der ungefilterten Meßwerte zeigt. Die Meßgeschwindigkeit betrug 20mm pro Sekunde;

Figur 3 a - c   sind Formplots eines kreisförmigen Wellennormals, die ebenso wie die nach Figur 2a - c ausgewertet wurden. Hier betrug die Meßgeschwindigkeit jedoch 10mm pro Sekunde;

Figur 4   ist ein vereinfachtes Blockdiagramm, das den Aufbau eines für Formmessungen geeigneten Koordinatenmeßgerätes zeigt;

Figur 5 und Figur 6   sind Flußdiagramme zur Erläuterung des Verfahrens der digitalen Filterung von nicht äquidistanten Meßpunkten.

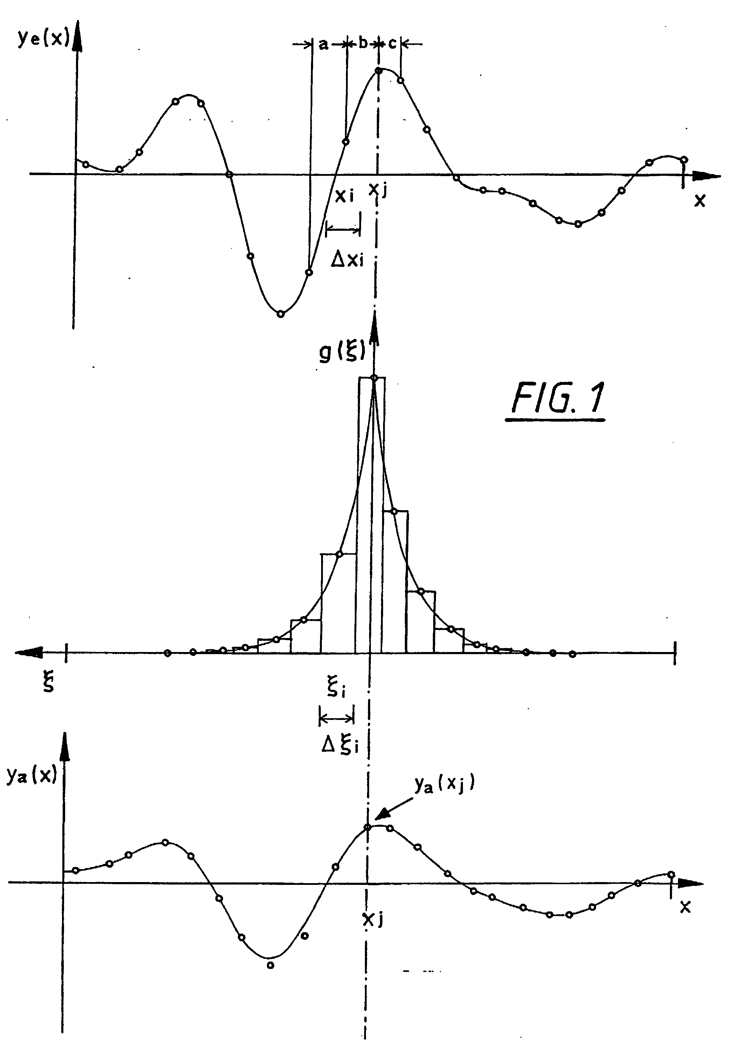

Zur Erläuterung des neuen Filterverfahrens dient die grafische Darstellung nach Figur 1. Dort ist im oberen Drittel eine Meßkurve von Eingangs-Meßwerten ($Ye(x)$) dargestellt, wobei der Abstand der Stützstellen, an denen Meßpunkte aufgenommen sind, entlang der x-Achse nicht äquidistant ist. Beispielsweise ist der Abstand des Meßpunkts ($xj$) zu seinem rechten Nachbarpunkt kleiner als der Abstand zu seinem linken Nachbarpunkt ($xi$). Im mittel sind die Abstände des Punktes ($xi$) zu seinen Nachbarpunkten größer als der mittlere Abstand des Meßpunkts ($xj$) zu seinen beiden direkten Nachbarpunkten.

In der mittleren Darstellung ist die Filterfunktion $g(\xi)$, die im beschriebenen Beispiel eine sogenannte 2RC-Charakteristik besitzt, dargestellt. Hier handelt es sich um eine Funktion, die nach beiden Seiten symetrisch exponentiell abfällt. Die Abstände zwischen den dort eingezeichneten Stützpunkten entsprechen den Abständen der Stützpunkte der Eingangs-Meßwerte in dem darüberliegenden Diagramm. Es gilt also auch für den mittleren Abstand zu den beiden jeweils benachbarten Meßpunkten ($\Delta xi$) = ($A\xi i$).

Zur Filterung des in diskreten Einzelpunkten vorliegenden Kurvenzugs der Eingangs-Meßwerte (Ye(x)) wird das Integral nach Gleichung (2) durch einen "Treppenzug" angenähert. Man kann dann für die Ausgangsmeßwerte Ya(xj) schreiben:

$$\texttt{Ya(xj)} = \sum_{i} \texttt{Ye(xj-}\xi\texttt{i)} \cdot \texttt{g(}\xi\texttt{i)} \cdot \Delta\xi\texttt{i} \qquad\qquad (3)$$

Ersetzt man in Gleichung (3) die (ξi) durch die entsprechenden (xi), so kann man statt (3) auch schreiben

$$\texttt{Ya(xj)} = \sum_{i} \texttt{Ye(xi)} \cdot \texttt{g(}\xi\texttt{i)} \cdot \Delta\xi\texttt{i} \quad \texttt{oder}$$

$$\texttt{Ya(xj)} = \sum_{i} \texttt{Ye(xi)} \cdot \texttt{g(}\xi\texttt{i)} \cdot \Delta\texttt{xi} \qquad\qquad (4)$$

Die digitale Filterung der Eingangs-Meßwerte (Ye(x)) läuft nun entsprechend Gleichung (4) ab. Hierzu wird nochmals auf Figur 1 Bezug genommen. Um den Ausgangsmeßwert Ya(xj) zu erhalten - das ist der mit dem Pfeil markierte Ausgangsmeßwert des gefilterten Kurvenzugs im unteren Diagramm der Figur 1 - wird die Summe aller Produke der im Bereich der Funktion (g(ξ)) um den Eingangs-Meßwert (Ye(xj)) herum liegenden Eingangs-Meßwerte mit den entsprechenden Funktionswerten der Filterfunktion (g(ξ)) gebildet, wobei jedoch zusätzlich die Einzelprodukte mit dem jeweiligen mittleren Abstand (Δxi) des betreffenden Meßpunkts zu seinen beiden direkten Nachbarpunkten mit berücksichtigt wird. Anschaulich wird also jeder Punkte der Eingangs-Meßpunkte (Ye(x)) mit der Fläche des darunter gezeichneten Streifens der Filterfunktion (g(ξ)) multipliziert. Vor dieser Operation ist noch sicherzustellen, daß die Filterfunktion (g(ξ)) auf 1 normiert ist, d.h. das die Bedingung

$$\sum_{i} \texttt{g(}\xi\texttt{i)} \cdot \Delta\xi\texttt{i} = 1 \qquad\qquad (5)$$

gilt. Diese Normierung folgt aus der Bedingung, daß bei einer Folge von konstanten Eingans-Meßwerten die Ausgangsmeßwerte ebenfalls konstant und gleich den Eingangswerten sind, d.h. der Übertragungsfaktor der Filterfunktion ist bei unendlicher Wellenlänge gleich 1.

Die Gleichung (4) beschreibt den Weg zur Berechnung eines einzigen Ausgangsmeßwertes (Ya(xj)) aus den Eingangs-Meßwerten (Ye(xi)). Die vollstände Folge der Ausgangsmeßwerte erhält man, indem man die Filterfunktion (g(ξ)) sozusagen über die Stützstellen der Meßpunkte der Eingangs-Meßwerte "durchschiebt" und für jeden Punkt die Summe nach Gleichung (4) berechnet und gleichzeitig dafür sorgt, daß jedes Mal die Normierung nach Gleichung (5) eingehalten wird. Auf diese Weise erhält man die Ausgangsmeßwerte (Ya(x)) im unteren Drittel der Figur 1.

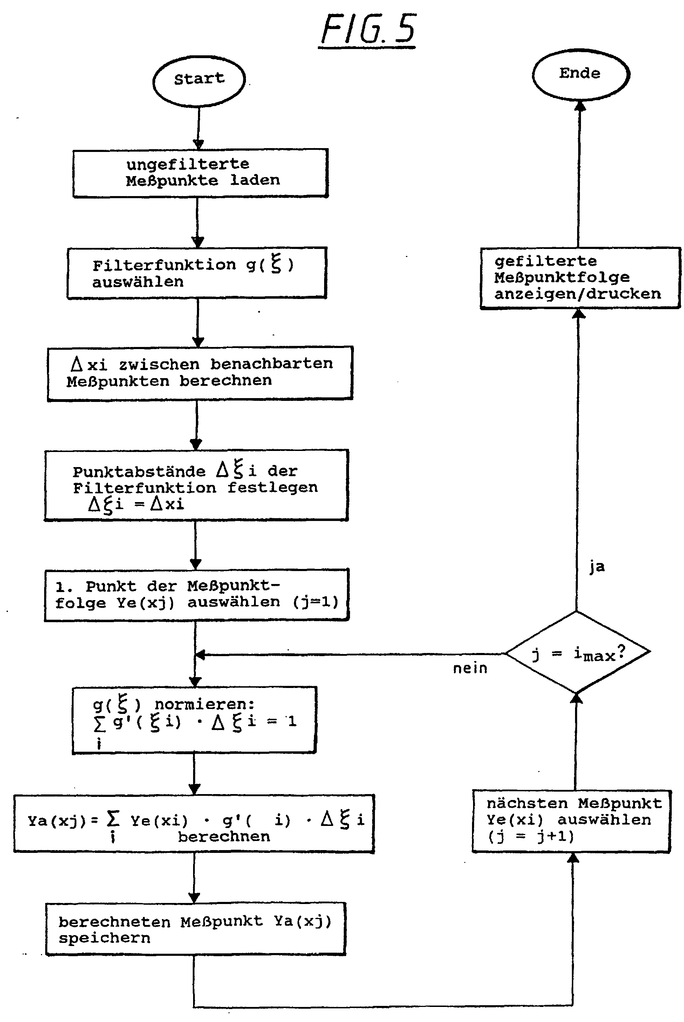

Programmtechnisch läuft der Filtervorgang wie im Flußdiagramm nach Figur 5 beispielhaft erläutert ab. Zu Beginn des Filtervorgangs werden die ungefilterten Eingangs-Meßwerte (Ye(x)) geladen und dann die darauf anzuwendende Filterfunktion ausgewählt. Beispielsweise kann anstatt der in Figur 1 dargestellten Funktion (g(ξ)) mit 2RC-Charakteristik auch eine Gauß-Funktion als Filterfunktion ausgewählt werden.

Anschließend werden die Abstände (Δxi) zwischen den benachbarten Stützstellen der Eingangs-Meßwerte berechnet und gespeichert und die Punktabstände (Δξi) der Filterfunktion entsprechend der Bedingung (Δξi) = (Δxi) festgelegt.

Im nächsten Schritt wird der erste Punkt der Folge der Eingangs-Meßwerte (Ye(xj)) ausgewählt und dann die "auf diesen Punkt geschobene" Filterfunktion (g(ξ))normiert.

Danach wird der erste Ausgangsmeßwert (Ya(xj)) entsprechend Gleichung (4) als Summe der Produkte der Eingangs-Meßwerte (Ye(xi)) mit der normierten Filterfunktion (g'(ξi)) und dem mittleren Abstand (Δξi) berechnet und als erster Meßpunkt der Folge der Ausgangsmeßwerte gespeichert.

Jetzt wird der nächste Meßpunkt der Eingangs-Meßwerte ausgewählt und die Filterprozedur für diesen wiederholt. Nachdem alle Eingangs-Meßwerte auf diese Weise behandelt worden sind, liegt die komplette Punktfolge der Ausgangsmeßwerte (Ya(x)) vor und kann angezeigt oder ausgedruckt werden.

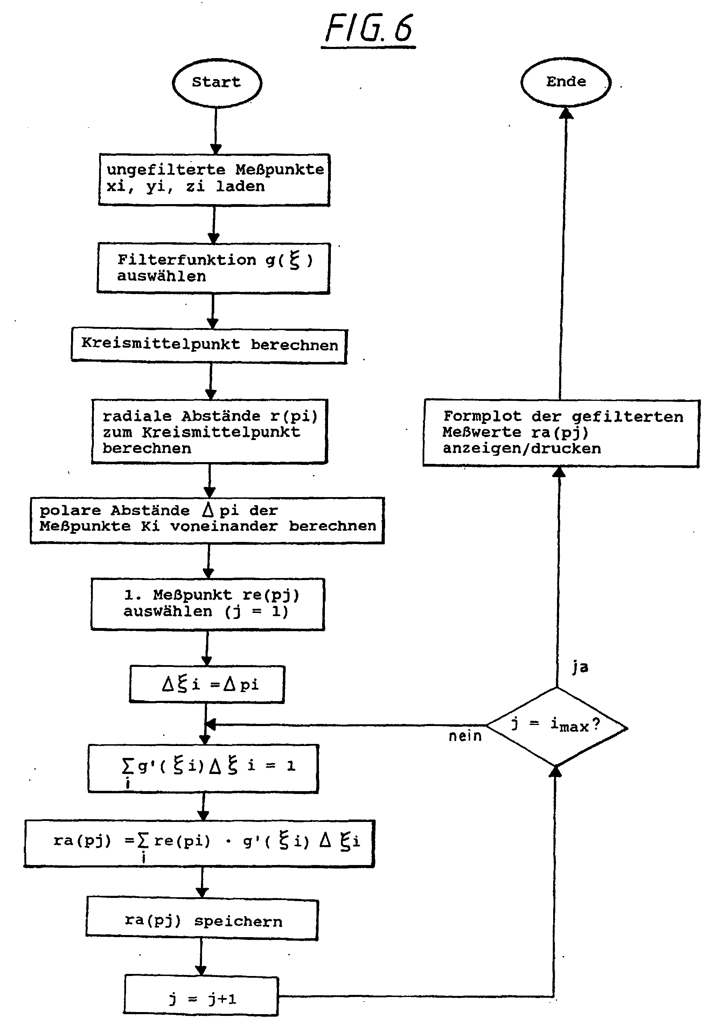

In Figur 6 ist ein etwas modifizierterer Programmablauf für den Fall dargestellt, daß die Eingangs-Meßpunkte mit nicht äquidistanten Abstand bei der Formmessung an einem kreisförmigen Körper gewonnen wurde. Hier wird nach dem Laden der Folge der ungefilterten Eingangs-Meßwerte und dem Auswählen der Filterfunktion erst einmal der Kreismittelpunkt oder ein Ausgleichskreis berechnet. Anschließend werden die radialen Abstände r(pi) zwischen den Stützstellen der Meßpunkte bezogen auf den Kreismittelpunkt berechnet. Dies ergibt eine Eingangs-Meßpunktfolge, die auf den Kreismittelpunkt als Basis bezogen ist.

Nun werden die polaren Abstände ($\Delta$pi) der Meßpunktfolge (ri) berechnet und gespeichert. Danach wird der erste Meßpunkt (re(pj)) ausgewählt und dann die "dorthin geschobene" Filterfunktion normiert.

Nun wird der erste Punkt der Ausgangsmeßwerte (ra(pj)) berechnet und gespeichert. Der übrige Ablauf entspricht dem anhand von Figur 5 beschriebenen.

Um das Unstetigkeitsproblem zu umgehen, das dadurch auftritt, daß der erste Punkt der Eingangs-Meßwerte nur auf einer Seite Nachbarn besitzt, kann folgendermaßen vorgegangen werden: Wenn die Meßwerte einen Vollkreis beschreiben, können die Meßwerte am Ende der Punktfolge mit den Anfangs-Meßwerten zyklisch fortgesetzt werden und umgekehrt.

Decken die Eingangs-Meßwerte nur einen Teilkreis ab bzw. nur einen Ausschnitt eines nicht geschlossenen Kurvenzugs, so können zum Zwecke der Filterung die "rechten Nachbarn" des ersten Meßpunkts an diesem auf die andere Seite gespiegelt werden, d.h. die Kurve wird mit den rechten Nachbarn nach links fortgesetzt und zwar soweit, wie der Einfluß der Filterfunktion reicht, als auch mit "linken Nachbarn" nach rechts fortgesetzt.

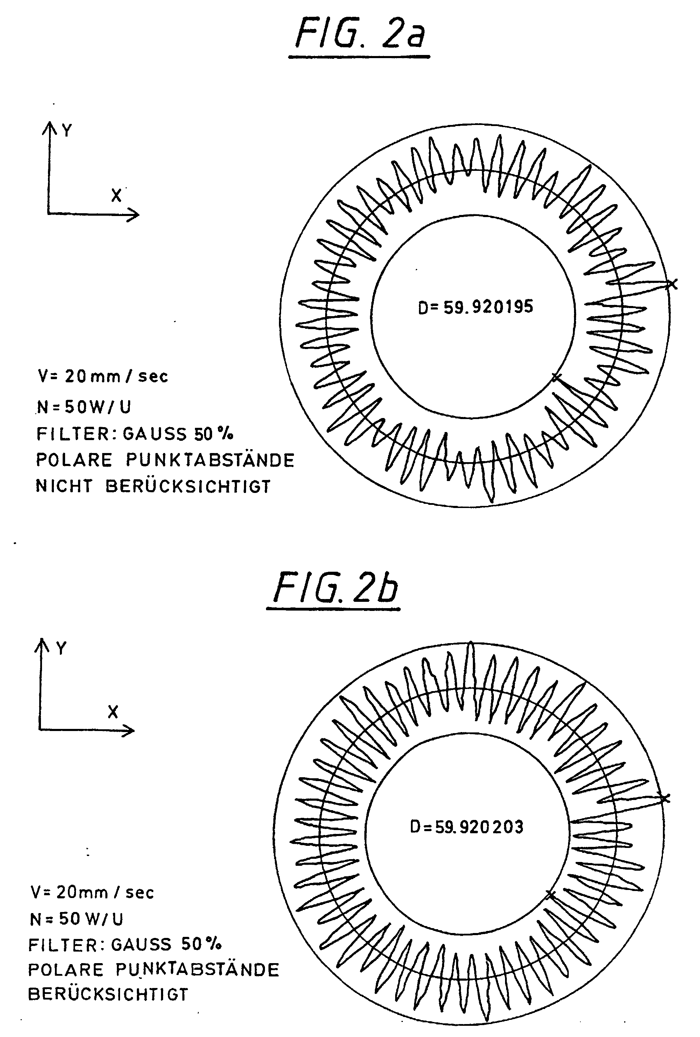

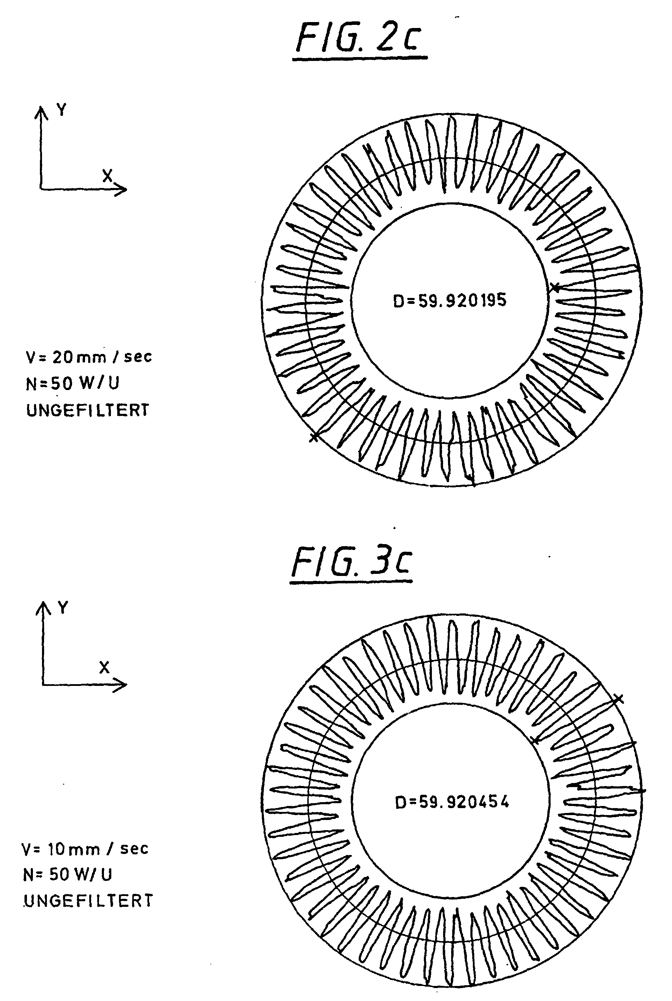

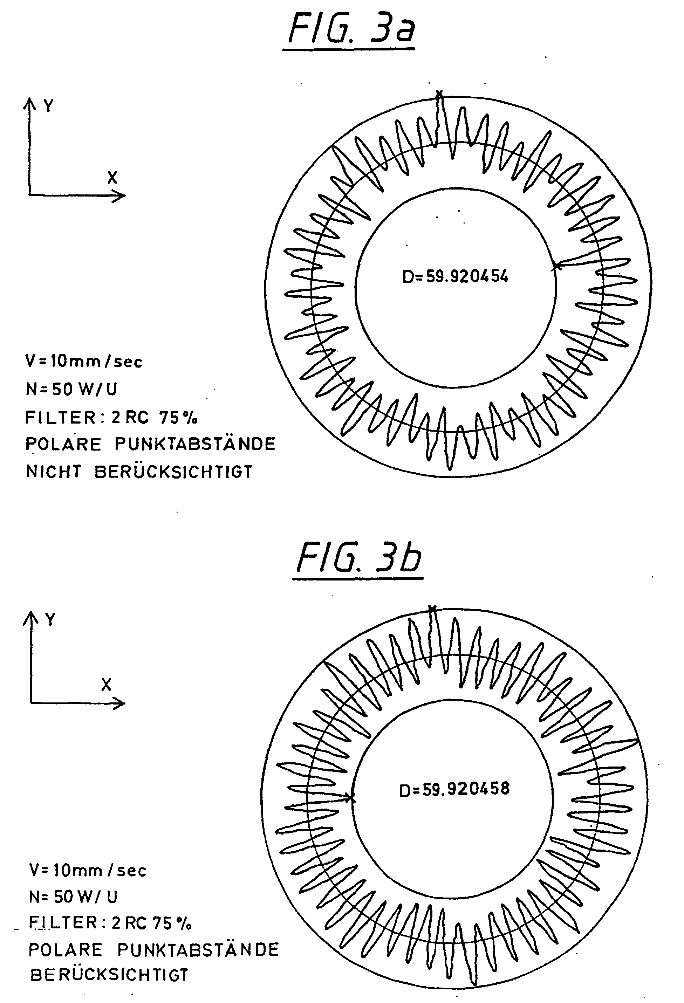

Zur Überprüfung der Wirksamkeit wurde das neue Filterverfahren an einem Wellennormal getestet. Das Wellennormal hatte einen Durchmesser von 60mm und besaß auf seinem Umfang 50 Wellen mit einer Amplitude von 3$\mu$m. Das Wellennormal wurde von einem Koordinatenmeßgerät mit einem messenden Tastkopf abgetastet, wobei der Durchmesser der Tastkugel 8mm betrug und die Abtastgeschwindigkeit einmal V = 20mm/s betrug (Figur 2) und einmal 10mm/s betrug (Figur 3). Aufgenommen wurden 566 Meßpunkte bei 20mm/s bzw. 1122 Meßpunkte bei 10mm/s. Die Abstände der Meßpunkte waren in allen Fällen nicht äquidistant sondern streuten statistisch bis zu einem Faktor 3.

Die aufgenommenen ungefilterten Meßwerte sind jeweils im Rundheits-Meßplott nach Figur 2c und Figur 3c dargestellt.

Beim ersten Beispiel nach Figur 2 wurden die Eingangs-Meßwerte anschließend digital mit einer Gauß-Filtercharakteristik gefiltert, die bei der Grenzwellenlänge 50 Wellen/Umfang einen Durchlaß von 50% besaß. Figur 2a zeigt die Ergebnisse der Filterung ohne Berücksichtigung der nicht äquidistanten Abstände der Meßpunkte, d.h. bei der Filterung wurden einfach wie nach dem Stand der Technik üblich die Summen der Produkte (Ye(x)) · (g($\xi$)) gebildet.

Wie man anhand von Figur 2a erkennen kann, treten starke Schwankungen der Amplituden der abgefahrenen Wellen des Normals auf. Diese Schwankungen täuschen eine Unrundheit des Normals vor, die tatsächlich nicht vorhanden war.

Anschließend wurden die Eingangs-Meßwerte unter Berücksichtigung ihrer nicht äquidistanten polaren Abstände gefiltert. Das Ergebnis zeigt Figur 2b. Die vorstehend beschriebenen Schwebungen sind deutlich reduziert. Verbleibende Abweichungen konnten im wesentlichen auf tatsächliche Rundheitsabweichungen des Wellennormals zurückgeführt werden.

Für die Formplotts in Figur 3 wurde genauso vorgegangen, mit dem Unterschied, daß neben der auf 10mm/s reduzierten Meßgeschwindigkeit auch ein anderes Filter für die Auswertung verwendet wurde, in diesem Falle ein Filter mit 2 RC-Charakteristik, das bei der Grenzwellenlänge 50 Wellen/Umfang einen Durchlaß von 75% besaß. Auch hier treten wie in Figur 3a ersichtlich bei den ohne Berücksichtigung der nicht äquidistanten Abstände gefilterten Meßpunkten die vorstehend beschriebenen Schwebungen deutlich hervor, während sie in Figur 3b im wesentlichen auf die tatsächlichen Rundheitsabweichungen reduziert sind.

**Patentansprüche**

1.   Meßverfahren, bei dem

a) Meßwertkurven gewonnen werden, die aus einer der nachfolgend aufgezählten Klassen von Meßwerten stammen:

- Formmeßwerte, die die Geometrie einer Oberfläche (5) beschreiben,
- Rauheitsmeßwerte, die die Rauheit einer Oberfläche beschreiben,
- Intensitätsmeßwerte, die die Intensität eines Meßsignals in Abhängigkeit von Zeit, Weg oder Frequenz beschreiben

b) zur Filterung dieser Meßwertkurven die als Punktfolge gewonnenen Eingangs-Meßwerte (Ye(x)) rechnerisch mit einer Filterfunktion (g($\xi$)) gefaltet werden, wobei die gegenseitigen Abstände ($\Delta$xi) der Punkte (xi, xj) der Punktfolge nicht äquidistant sind und die Abstände ($\Delta$xi) der Punkte bei der Berechnung der gefilterten Ausgangs-Meßwerte (Ya(x)) berücksichtigt werden, indem die Eingangs-Meßwerte (Ye(x)) punktweise mit Funktionswerten (g($\xi$i)) der Filterfunktion (g($\xi$)) multipliziert werden und die Produkte mit dem Wert des jeweiligen Abstandes zu den benachbarten Meßpunkten, vorzugsweise dem Mittelwert ($\Delta$xi) der Abstände (a, b) zu den beiden direkt benachbarten Punkten der Folge gewichtet werden.

2. Verfahren nach Anspruch 1, wobei für eine Vielzahl von Meßpunkten der mittlere Abstand ($\Delta$xi) eines Punktes (xi) von seinen jeweils direkt benachbarten Meßpunkten (xi-1), (xi+1) mit dem Funktionswert ($\xi$i), der Filterfunktion an der betreffenden Stelle multipliziert wird und die so modifizierte Filterfunktion normiert wird, bevor sie mit den Eingangs-Meßwerten gefaltet wird.

3. Verfahren nach einem der Ansprüche 1 - 2, wobei die Eingangs-Meßwerte (Ye(x)) nicht äquidistant in Bezug auf ihren zeitlichen oder geometrisch-räumlichen Abstand ($\Delta$xi) vorliegen.

4. Verfahren nach einem der Ansprüche 1 - 3, wobei die Filterfunktion eine Gaußfunktion ist oder eine 2RC-Charakteristik besitzt.

5. Verfahren nach Anspruch 1, wobei die Meßwerte gewonnen werden, indem Oberflächen (5) mit variabler Geschwindigkeit und/oder mit variabler Datenrate abgetastet werden.

6. Verfahren nach Anspruch 5, wobei die Meßwerte nach einem der folgenden Verfahren generiert werden:

- Erzeugung von Abstandsmeßwerten mit Hilfe eines über eine Oberfläche bewegten optischen Abstandssensors,
- Erzeugung von Lagemeßwerten (x,y,z) bzw. Tastkoordinaten mit Hilfe eines die Oberfläche eines Körpers mechanisch berührend abtastenden Tasters (1).

7. Meßgerät, mit

a) Meßmitteln (1,2,6) zum gewinnen von Meßwertkurven, die aus einer der nachfolgend aufgezählten Klassen von Meßwerten stammen:

- Formmeßwerte, die die Geometrie einer Oberfläche (5) beschreiben,
- Rauheitsmeßwerte, die die Rauheit einer Oberfläche beschreiben,
- Intensitätsmeßwerte, die die Intensität eines Meßsignals in Abhängigkeit von Zeit, Weg oder Frequenz beschreiben

b) Verarbeitungsmitteln (3), die zur Filterung dieser Meßwertkurven die als Punktfolge gewonnenen Eingangs-Meßwerte (Ye(x)) rechnerisch mit einer Filterfünktion (g($\xi$)) falten, wobei die gegenseitigen Abstände ($\Delta$xi) der Punkte (xi, xj) der Punktfolge nicht äquidistant sind und die Abstände ($\Delta$xi) der Punkte bei der Berechnung der gefilterten Ausgangs-Meßwerte (Ya(x)) berücksichtigt werden, indem die Eingangs-Meßwerte (Ye(x)) punktweise mit Funktionswerten (g($\xi$i)) der Filterfünktion (g($\xi$)) multipliziert werden und die Produkte mit dem Wert des jeweiligen Abstandes zu den benachbarten Meßpunkten, vorzugsweise dem Mittelwert ($\Delta$xi) der Abstände (a, b) zu den beiden direkt benachbarten Punkten der Folge gewichtet werden.

8. Meßgerät nach Anspruch 7, wobei die Verarbeitungsmittel für eine Vielzahl von Meßpunkten den mittleren Abstand ($\Delta$xi) eines Punktes (xi) von seinen jeweils direkt benachbarten Meßpunkten (xi-1), (xi+1) mit dem Funktionswert ($\xi$i), der Filterfunktion an der betreffenden Stelle multiplizieren und die so modifizierte Filterfunktion normieren, bevor sie mit den Eingangs-Meßwerten gefaltet wird.

9. Meßgerät nach einem der Ansprüche 7 oder 8, wobei die Eingangs-Meßwerte (Ye(x)) nicht äquidistant in Bezug auf ihren zeitlichen oder geometrisch-räumlichen Abstand ($\Delta$xi) vorliegen.

10. Meßgerät nach einem der Ansprüche 7 - 9, wobei die Filterfunktion eine Gaußfunktion ist oder eine 2RC-Charakteristik besitzt.

11. Meßgerät nach Anspruch 7, wobei die Messmittel die Meßwerte derart gewinnen, daß Oberflächen (5) mit variabler Geschwindigkeit und/oder mit variabler Datenrate abgetastet werden.

12. Meßgerät nach Anspruch 11, wobei die Messmittel die Meßwerte nach einem der folgenden Verfahren generieren:

   - Erzeugung von Abstandsmeßwerten mit Hilfe eines über eine Oberfläche bewegten optischen Abstandssensors,
   - Erzeugung von Lagemeßwerten (x,y,z) bzw. Tastkoordinaten mit Hilfe eines die Oberfläche eines Körpers mechanisch berührend abtastenden Tasters (1).


**Claims**

1. Measuring method in which

   a) measured value curves are obtained which originate from one of the classes of measured values listed below:

   - shape measured values which describe the geometry of a surface (5),
   - roughness measured values which describe the roughness of a surface,
   - intensity measured values which describe the intensity of a measured signal as a function of time, distance or frequency

   b) in order to filter these measured value curves, the input measured values (Ye(x)), obtained as a sequence of points, are convoluted by computer with a filter function $(g(\zeta))$, the mutual spacings $(\Delta xi)$ of the points (xi, xj) in the sequence of points not being equidistant, and the distances $(\Delta xi)$ between the points being taken into account in the calculation of the filtered output measured values (Ya(x)), by the input measured values (Ye(x)) being multiplied point by point by functional values $(g(\zeta i))$ of the filter function $(g(\zeta))$, and the products being weighted with the value of the respective distance from the adjacent measured points, preferably the average $(\Delta xi)$ of the distances (a, b) to the two directly adjacent points in the sequence.

2. Method according to Claim 1, where, for a large number of measured points, the average distance $(\Delta xi)$ of a point (xi) from its respectively directly adjacent measured points (xi-1), (xi+1) is multiplied by the functional value $(\zeta i)$ of the filter function at the relevant location, and the filter function modified in this way is normalized before it is convoluted with the input measured values.

3. Method according to one of Claims 1-2, the input measured values (Ye(x)) not being present equidistantly in relation to their chronological or geometrical-spatial distance $(\Delta xi)$.

4. Method according to one of Claims 1-3, the filter function being a Gaussian function or possessing a 2RC characteristic.

5. Method according to Claim 1, the measured values being obtained by surfaces (5) being scanned at a variable speed and/or with a variable data rate.

6. Method according to Claim 5, the measured values being generated in accordance with one of the following methods:

   - generation of distance measured values with the aid of an optical distance sensor moved over a surface,
   - generation of position measured values (x, y, z) or sensing coordinates with the aid of a scanning sensor (1) making mechanical contact with the surface of a body.

7. Measuring instrument, having

   a) measuring means (1, 2, 6) for obtaining measured value curves which originate from one of the classes of measured values listed below:

   - shape measured values which describe the geometry of a surface (5),
   - roughness measured values which describe the roughness of a surface,
   - intensity measured values which describe the intensity of a measured signal as a function of time, distance or frequency

b) processing means (3) which, in order to filter these measured value curves, the input measured values (Ye (x)), obtained as a sequence of points, are convoluted by computer with a filter function (g(ζ)), the mutual spacings (Δ xi) of the points (xi, xj) in the sequence of points not being equidistant, and the distances (Δ xi) between the points being taken into account in the calculation of the filtered output measured values (Ya(x)), by the input measured values (Ye(x)) being multiplied point by point by functional values (g(ζi)) of the filter function (g(ζ)), and the products being weighted with the value of the respective distance from the adjacent measured points, preferably the average (Δ xi) of the distances (a, b) to the two directly adjacent points in the sequence.

8. Measuring instrument according to Claim 7, wherein, for a large number of measured points, the processing means multiply the average distance (Δ xi) of a point (xi) from its respectively directly adjacent measured points (xi-1), (xi+1) by the functional value (ζi) of the filter function at the relevant location, and normalize the filter function modified in this way before it is convoluted with the input measured values.

9. Measuring instrument according to either of Claims 7 and 8, the input measured values (Ye(x)) not being present equidistantly in relation to their chronological or geometrical-spatial distance (Δ xi).

10. Measuring instrument according to one of Claims 7-9, the filter function being a Gaussian function or possessing a 2RC characteristic.

11. Measuring instrument according to Claim 7, the measuring means obtaining measured values by surfaces (5) being scanned at a variable speed and/or with a variable data rate.

12. Measuring instrument according to Claim 11013, the measuring means generating the measured values in accordance with one of the following methods:

- generation of distance measured values with the aid of an optical distance sensor moved over a surface,
- generation of position measured values (x, y, z) or sensing coordinates with the aid of a scanning sensor (1) making mechanical contact with the surface of a body.

**Revendications**

1. Procédé de mesure avec lequel

a) sont acquises des courbes de valeurs mesurées qui sont issues de l'une des classes de valeurs mesurées énumérées ci-après :

- valeurs mesurées de forme qui décrivent la forme géométrique d'une surface (5),
- valeurs mesurées de rugosité qui décrivent la rugosité d'une surface,
- valeurs mesurées d'intensité qui décrivent l'intensité d'un signal de mesure en fonction du temps, de la course ou de la fréquence

b) les valeurs mesurées d'entrée (Ye(x)) acquises sous la forme de séries de points subissent une convolution par calcul avec une fonction de filtrage (g(ξ)) pour filtrer ces courbes de valeurs mesurées, les écarts réciproques (Δxi) des points (xi, xj) des séries de points n'étant pas équidistants et les écarts (Δxi) des points étant pris en compte lors du calcul des valeurs mesurées de sortie filtrées (Ya(x)) en multipliant les valeurs mesurées d'entrée (Ye(x)) ponctuellement par les valeurs de fonction (g(ξi)) de la fonction de filtrage (g(ξ)) et les produits étant pondérés avec la valeur de l'écart correspondant par rapport aux points de mesure voisins, de préférence la valeur moyenne (Δxi) des écarts (a, b) par rapport aux deux points directement voisins de la série.

2. Procédé selon la revendication 1, avec lequel pour une pluralité de points de mesure l'écart moyen (Δxi) d'un point (xi) par rapport à ses points de mesure directement voisins respectifs (xi-1), (xi+1) est multiplié par la valeur de fonction (ξi) de la fonction de filtrage à l'endroit concerné et la fonction de filtrage ainsi modifiée est normalisée avant qu'elle ne soit soumise à une convolution avec les valeurs mesurées d'entrée.

3. Procédé selon l'une des revendications 1 - 2, avec lequel les valeurs mesurées d'entrée (Ye(x)) ne sont pas équidistantes au niveau de leur écart temporel ou géométrique-spatial (Δxi).

**4.** Procédé selon l'une des revendications 1 - 3, avec lequel la fonction de filtrage est une fonction de Gauss ou possède une caractéristique 2RC.

**5.** Procédé selon la revendication 1, avec lequel les valeurs mesurées sont obtenues en palpant les surfaces (5) avec une vitesse variable et/ou avec un débit de données variable.

**6.** Procédé selon la revendication 5, avec lequel les valeurs mesurées sont générées d'après l'un des procédés suivants :

- Production de valeurs mesurées de l'écart à l'aide d'un capteur d'écart optique déplacé au-dessus de la surface,
- Production de valeurs mesurées de la position (x, y, z) ou de coordonnées de palpage à l'aide d'un palpeur (1) qui palpe la surface d'un corps par contact mécanique avec celle-ci.

**7.** Appareil de mesure comprenant :

a) des moyens de mesure (1, 2, 6) destinés à obtenir des courbes de valeurs mesurées qui sont issues de l'une des classes de valeurs mesurées énumérées ci-après :

- valeurs mesurées de forme qui décrivent la forme géométrique d'une surface (5),
- valeurs mesurées de rugosité qui décrivent la rugosité d'une surface,
- valeurs mesurées d'intensité qui décrivent l'intensité d'un signal de mesure en fonction du temps, de la course ou de la fréquence

b) des moyens de traitement (3) qui effectuent une convolution par calcul avec une fonction de filtrage ($g(\xi)$) des valeurs mesurées d'entrée ($Ye(x)$) acquises sous la forme de séries de points pour filtrer ces courbes de valeurs mesurées, les écarts réciproques ($\Delta xi$) des points (xi, xj) des séries de points n'étant pas équidistants et les écarts ($\Delta xi$) des points étant pris en compte lors du calcul des valeurs mesurées de sortie filtrées ($Ya(x)$) en multipliant les valeurs mesurées d'entrée ($Ye(x)$) ponctuellement par les valeurs de fonction ($g(\xi i)$) de la fonction de filtrage ($g(\xi)$) et les produits étant pondérés avec la valeur de l'écart correspondant par rapport aux points de mesure voisins, de préférence la valeur moyenne ($\Delta xi$) des écarts (a, b) par rapport aux deux points directement voisins de la série.

**8.** Appareil de mesure selon la revendication 7, avec lequel les moyens de traitement multiplient pour une pluralité de points de mesure l'écart moyen ($\Delta xi$) d'un point (xi) par rapport à ses points de mesure directement voisins respectifs (xi-1), (xi+1) par la valeur de fonction ($\xi i$) de la fonction de filtrage à l'endroit concerné et la fonction de filtrage ainsi modifiée est normalisée avant qu'elle ne soit soumise à une convolution avec les valeurs mesurées d'entrée.

**9.** Appareil de mesure selon l'une des revendications 7 ou 8, avec lequel les valeurs mesurées d'entrée ($Ye(x)$) ne sont pas équidistantes au niveau de leur écart temporel ou géométrique-spatial ($\Delta xi$).

**10.** Appareil de mesure selon l'une des revendications 7 - 9, avec lequel la fonction de filtrage est une fonction de Gauss ou possède une caractéristique 2RC.

**11.** Appareil de mesure selon la revendication 7, avec lequel les moyens de mesure acquièrent les valeurs mesurées en palpant les surfaces (5) avec une vitesse variable et/ou avec un débit de données variable.

**12.** Appareil de mesure selon la revendication 11, avec lequel les moyens de mesure génèrent les valeurs mesurées d'après l'un des procédés suivants :

- Production de valeurs mesurées de l'écart à l'aide d'un capteur d'écart optique déplacé au-dessus de la surface,
- Production de valeurs mesurées de la position (x, y, z) ou de coordonnées de palpage à l'aide d'un palpeur (1) qui palpe la surface d'un corps par contact mécanique avec celle-ci.

_FIG. 1_

## _FIG. 2a_

Y

X

V = 20 mm / sec

N = 50 W / U

FILTER: GAUSS 50 %

POLARE PUNKTABSTÄNDE
NICHT BERÜCKSICHTIGT

D = 59.920195

## _FIG. 2b_

Y

X

V = 20 mm / sec

N = 50 W / U

FILTER: GAUSS 50 %

POLARE PUNKTABSTÄNDE
BERÜCKSICHTIGT

D = 59.920 203

## FIG. 2c

Y

X

V = 20 mm / sec
N = 50 W / U
UNGEFILTERT

D = 59.920195

## FIG. 3c

Y

X

V = 10 mm / sec
N = 50 W / U
UNGEFILTERT

D = 59.920454

## FIG. 3a

Y

X

D=59.920454

V = 10mm / sec

N = 50 W/U

FILTER : 2 RC 75 %

POLARE PUNKTABSTÄNDE

NICHT BERÜCKSICHTIGT

## FIG. 3b

Y

X

D=59.920458

V = 10mm / sec

N = 50 W/ U

FILTER : 2 RC 75 %

POLARE PUNKTABSTÄNDE

BERÜCKSICHTIGT

## FIG. 4

## FIG. 5

```
           Start                              Ende


    ungefilterte
    Meßpunkte laden                     gefilterte
                                        Meßpunktfolge
                                        anzeigen/drucken

    Filterfunktion g($\xi$)
    auswählen


    $\Delta$xi zwischen benachbarten
    Meßpunkten berechnen
                                                    ja

    Punktabstände $\Delta\xi$i der
    Filterfunktion festlegen
    $\Delta\xi$i = $\Delta$xi


    1. Punkt der Meßpunkt-
    folge Ye(xj) auswählen (j=1)
                                    nein        j = i$_{max}$?

    g($\xi$) normieren:
    $\sum\limits_{i}$ g'($\xi$i) $\cdot$ $\Delta\xi$i = 1


    Ya(xj) = $\sum\limits_{i}$ Ye(xi) $\cdot$ g'( i) $\cdot$ $\Delta\xi$i    nächsten Meßpunkt
                      berechnen                 Ye(xi) auswählen
                                                (j = j+1)

    berechneten Meßpunkt Ya(xj)
    speichern
```

## FIG. 6

```
Start                                            Ende
  │                                                ↑
  ▼                                                │
┌─────────────────────┐                            │
│ ungefilterte Meßpunkte │                         │
│ xi, yi, zi laden    │                            │
└─────────────────────┘                            │
  │                                                │
  ▼                                                │
┌─────────────────────┐                            │
│ Filterfunktion g(ξ) │                            │
│ auswählen           │                            │
└─────────────────────┘                            │
  │                                                │
  ▼                                                │
┌─────────────────────┐                   ┌──────────────────────┐
│ Kreismittelpunkt berechnen │            │ Formplot der gefilterten │
└─────────────────────┘                   │ Meßwerte ra(pj)        │
  │                                        │ anzeigen/drucken       │
  ▼                                        └──────────────────────┘
┌─────────────────────┐                            ↑
│ radiale Abstände r(pi) │                         │
│ zum Kreismittelpunkt │                           │
│ berechnen           │                            │
└─────────────────────┘                            │
  │                                                │
  ▼                                                │
┌──────────────────────────┐                       │
│ polare Abstände Δpi der  │                        │
│ Meßpunkte Ki voneinander berechnen │             │
└──────────────────────────┘                       │
  │                                                │
  ▼                                            ja   │
┌─────────────────────┐                            │
│ 1. Meßpunkt re(pj)  │                             │
│ auswählen (j = 1)   │                             │
└─────────────────────┘                      ◇ j = imax?
  │                                    nein  ╱       ╲
  ▼                                  ◄──────         
┌─────────────────────┐
│ Δξi = Δpi           │
└─────────────────────┘
  │
  ▼
┌─────────────────────┐
│ Σ g'(ξi) Δξi = 1    │
│ i                   │
└─────────────────────┘
  │
  ▼
┌──────────────────────────┐
│ ra(pj) = Σ re(pi) · g'(ξi) Δξi │
│          i               │
└──────────────────────────┘
  │
  ▼
┌─────────────────────┐
│ ra(pj) speichern    │
└─────────────────────┘
  │
  ▼
┌─────────────────────┐
│ j = j+1             │
└─────────────────────┘
```